# FASCICULE DE BREVET EUROPEEN

(11) **EP 1 338 187 B1**
(45) Date de publication et mention de la délivrance du brevet: **13.12.2006**
(21) Numéro de dépôt: 03290374.2
(22) Date de dépôt: 17.02.2003
(51) Int. Cl.: A01C 7/20

(54) **Dispositif d'implantation de graines**
Sameneinführvorrichtung
Seed implantation device

(30) Priorité: 20.02.2002 FR 0202457
(43) Date de publication de la demande: 27.08.2003
(73) Titulaire: Kuhn-Nodet S.A., 77876 Montereau (FR)
(72) Inventeur: Constant, Olivier, 77130 Misy sur Yonne (FR)
(74) Mandataire: Andres, Jean-Claude

(56) Documents cités:
- US-A- 2 861 527
- US-A- 5 664 507
- US-A- 5 931 105

## Description

La présente invention se rapporte à un dispositif d'implantation de graines dans le sol comportant deux disques, un support de disques et une goulotte d'alimentation en graines liée de manière amovible d'une part audit support de disques au moyen d'un premier point de liaison constitué d'un dispositif d'accrochage et d'autre part audit dispositif d'implantation de graines dans le sol au moyen d'un deuxième point de liaison, ladite goulotte d'alimentation en graines étant amovible sans nécessiter le démontage d'un desdits disques.

L'invention se rapporte également à un semoir équipé de tels dispositifs d'implantation de graines dans le sol semblables à ceux décrits ci-dessus.

Un tel dispositif est déjà connu de l'homme du métier. En effet, le document **US 5 931 105** décrit un semoir de type monograine comportant des unités de semis liées à une poutre rectangulaire. Chaque unité de semis comporte un cadre sur lequel sont montés une trémie d'alimentation en graines, un mécanisme de dosage et un dispositif d'implantation de graines dans le sol. Le dispositif d'implantation de graines dans le sol connu est constitué de disques, d'un support de disques et d'une goulotte. La goulotte est reliée audit mécanisme de dosage afin d'être alimentée en graines et assure la mise en terre de la graine. Ladite goulotte d'alimentation est maintenue sur le support de disques par l'intermédiaire de deux points de liaison. La goulotte d'alimentation comporte un point de liaison inférieur et un point de liaison supérieur. Le point de liaison supérieur est réalisé sous forme d'ergots qui sont liés à la goulotte d'alimentation.

Dans la réalisation pratique d'un tel semoir le démontage de la goulotte d'alimentation en graines, s'effectue vers le haut et ne nécessite donc pas le démontage d'un disque. Par contre, le démontage de la goulotte d'alimentation par le haut requiert de la place en amont. De part l'encombrement de pièces, l'accès à la goulotte d'alimentation de chaque unité de semis est limité. En effet lorsque l'utilisateur du semoir souhaite accéder à la goulotte d'alimentation en graines, il faut au préalable, qu'il enlève le mécanisme de dosage situé au-dessus de la goulotte d'alimentation. Lorsque l'accès au logement de la goulotte est dégagé, il faut neutraliser le point de liaison supérieur. Lorsque les ergots sont libérés de leurs logements, la goulotte d'alimentation est maintenue en position par le point de liaison inférieur. Celui-ci est dégagé lorsque la goulotte est retirée vers le haut.

L'utilisateur d'un tel semoir sera amené à démonter ladite goulotte d'alimentation en graines lorsqu'il veut par exemple adapter la goulotte au type de graines qu'il va semer ou lors d'une perturbation de l'opération de semis.

L'accumulation de débris et de terre dans le dispositif d'implantation de graines dans le sol peut entraîner des perturbations de l'opération de semis lors du fonctionnement du semoir sur un terrain chargé en débris végétaux. L'agglomération de terre entre les deux disques peut bloquer la distribution des graines et peut obstruer l'ouverture de la goulotte d'alimentation en graines. Les graines ne peuvent alors plus, d'une part, être déposées à la profondeur désirée et d'autre part ne plus assurer une bonne formation du sillon. Il est donc nécessaire, afin de retrouver des conditions de travail normales, d'enlever les débris accumulés entre les deux disques.

De plus sur ce type de machine, il est de plus en plus courant d'avoir des largeurs de travail élevées ce qui signifie qu'un nombre important d'unités de semis est utilisé. L'opération de nettoyage ou de remplacement des goulottes d'alimentation est donc particulièrement pénible et coûteuse en temps.

La présente invention a pour but de s'affranchir des inconvénients rencontrés dans l'état de la technique. Elle doit notamment proposer un dispositif d'implantation de graines dans le sol qui présente d'une part, un meilleur accès à l'espace entre les deux disques et d'autre part un accès rapide et facile à la goulotte d'alimentation en graines.

A cet effet, le dispositif d'implantation de graines dans le sol, selon la présente invention, est caractérisé par le fait que ledit premier point de liaison est conformé de sorte que ladite goulotte d'alimentation en graines puisse pivoter vers l'arrière après neutralisation dudit deuxième point de liaison.

Selon une autre caractéristique de la présente invention, ladite goulotte d'alimentation en graines est amovible sans nécessiter d'outil.

D'autres particularités et avantages de l'invention ressortiront plus en détail à la lecture de la description, donnée ci-après, qui se réfère aux dessins annexés qui représentent, à titre d'exemples non limitatifs, une forme de réalisation de l'invention. Dans ces dessins :
- la figure 1 représente une vue ¾ arrière d'un semoir comportant des dispositifs d'implantation de graines dans le sol conformes à l'invention,
- la figure 2 représente une vue de côté du semoir de la figure 1,
- la figure 3 représente à plus grande échelle, un dispositif d'implantation de graines dans le sol conforme à l'invention,
- la figure 4 représente, une vue éclatée du dispositif d'implantation de graines dans le sol de la figure 3.

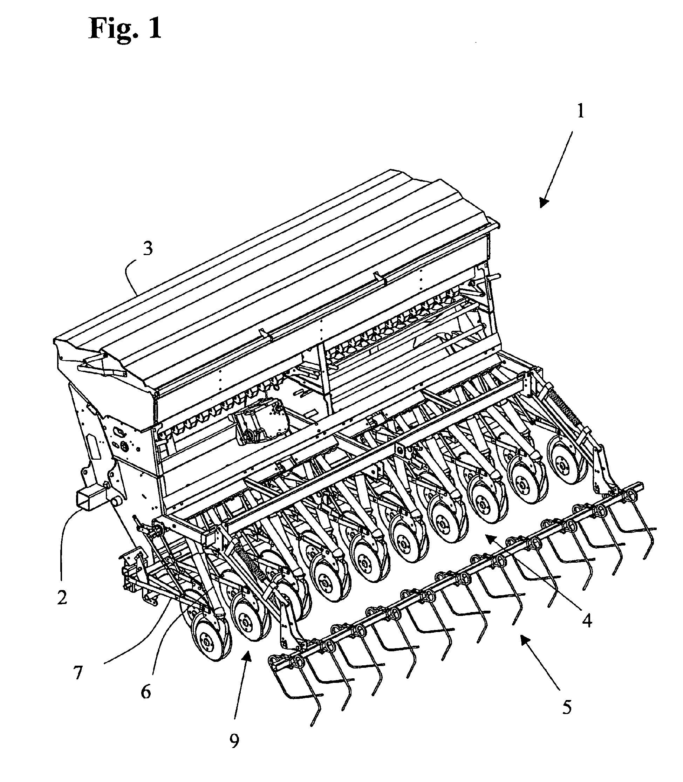

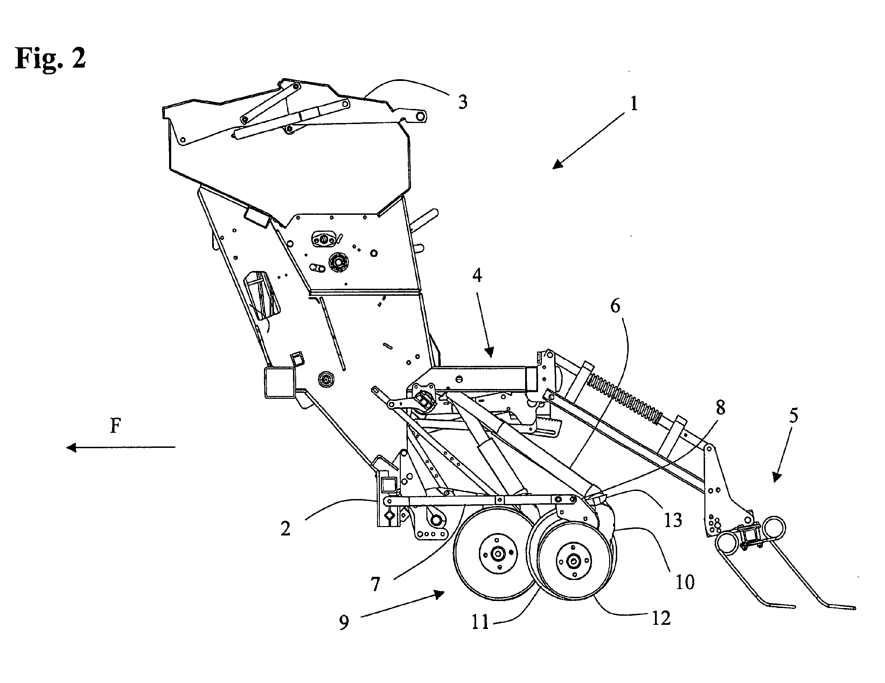

Le semoir (1) représenté sur les figures 1 et 2 comporte un châssis (2) qui porte une trémie (3) contenant de la semence, des dispositifs d'implantation de graines dans le sol (4) et un dispositif de recouvrement (5). Lors du travail, ledit châssis (2) est accouplé, d'une manière connue de l'homme de l'art, à l'attelage arrière d'un tracteur (non représenté). Ledit tracteur permet ainsi de déplacer ledit semoir (1) suivant une direction et un sens d'avance indiqué par la flèche (F).

Ledit dispositif de recouvrement (5) est situé derrière les dispositifs d'implantation de graines dans le sol (4) dudit semoir (1) par rapport au sens d'avance (F). Lesdits dispositifs d'implantation de graines dans le sol (4) sont approvisionnés à partir de ladite trémie (3) par des tubes d'alimentation (6). Lesdits dispositifs d'implantation de graines dans le sol (4), conforme à l'invention, sont disposés sensiblement derrière et dans un plan sensiblement en dessous de ladite trémie (3) et sur toute la largeur du semoir (1). Dans l'exemple de réalisation de la figure 1, ledit semoir (1) est avantageusement un semoir mécanique. Lesdits dispositifs d'implantation de graines dans le sol (4) sont disposés de préférence selon deux rangées et sont espacés de telle sorte qu'il y a des intervalles assez réguliers entre les lignes dans lesquelles sont déposées les graines.

Comme représenté sur la figure 2, lesdits dispositifs d'implantation de graines dans le sol (4) sont liés audit châssis (2) au moyen de bras de soc (7). Chaque dispositif d'implantation de graines dans le sol (4) comporte essentiellement un support de disques (8) soutenant à la fois des disques (9) et une goulotte d'alimentation en graines (10). Ledit support de disques (8) est lié audit bras de soc (7) au moyen de vis et sa position est avantageusement réglable. Généralement pour un tel semoir (1), le dispositif d'implantation de graines dans le sol (4) comporte deux disques (9) constitués d'un disque principal (11) et d'un disque secondaire (12).

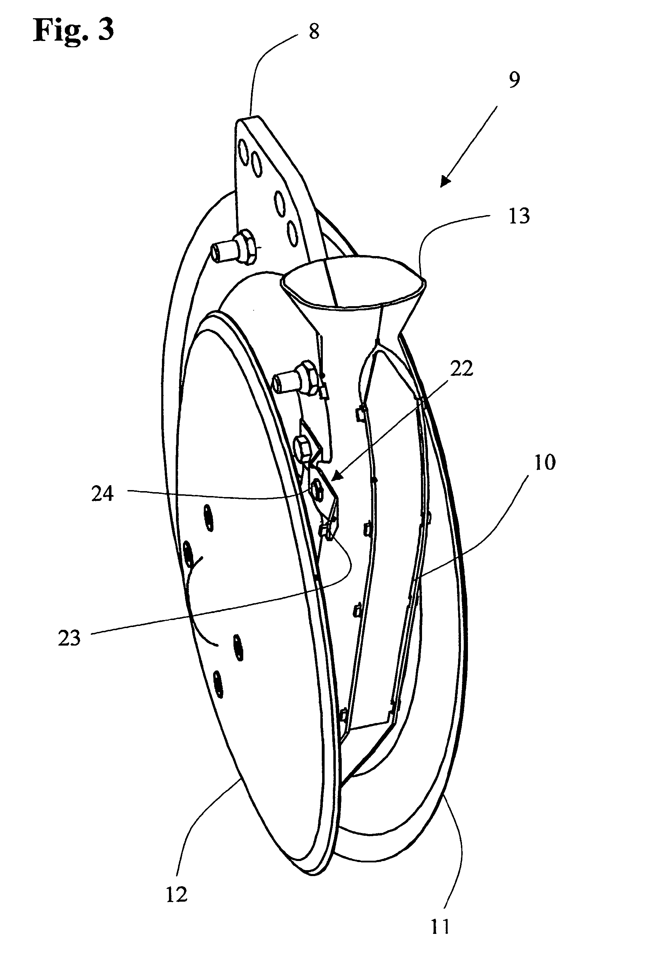

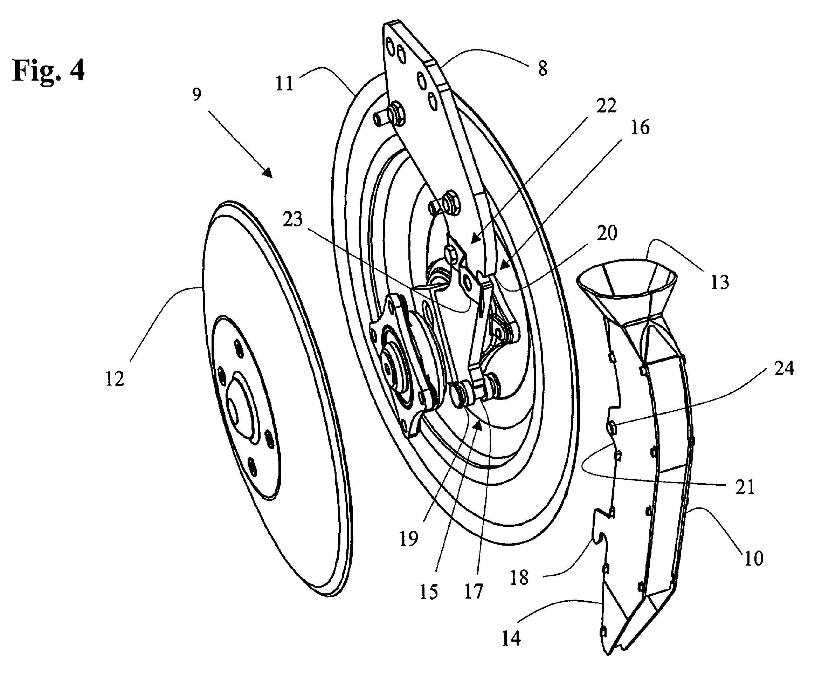

A la lumière des figures 3 et 4, ledit disque principal (11) et ledit disque secondaire (12) sont montés libres en rotation sur ledit support de disques (8). Ledit support de disques (8) comporte ainsi un axe de rotation pour le disque principal (11) et un axe de rotation pour le disque secondaire (12). Les deux axes de rotation sont sensiblement perpendiculaires à la direction d'avance (F) et présentent, en sus une orientation particulière, donnant au disque principal (11) une orientation optimale pour creuser un sillon. Les disques (9) sont avantageusement inclinés par rapport à la verticale de façon à ce que leurs périphéries se rejoignent vers l'avant en allant dans le sens d'avancement (F).

D'une manière préférentielle, le disque secondaire (12) présente un diamètre inférieur vis-à-vis dudit disque principal (11) et un axe de rotation décalé par rapport à l'axe de rotation du disque principal (11). La différence de diamètre et la position décalée desdits disques (9) engendrent une différence de vitesse de rotation entre lesdits disques (9). Cette vitesse différentielle assure avantageusement le nettoyage dudit disque principal (11) durant le travail, car la périphérie dudit disque secondaire (12) située vers l'avant sert de racloir au voisinage du côté interne dudit disque principal (11).

Conformément à la figure 4, la goulotte d'alimentation (10) possède un orifice d'entrée (13) relié audit tube d'alimentation (6) par lequel arrivent les graines. La partie inférieure de chaque goulotte d'alimentation (10) possède un orifice de sortie (14) par lequel lesdites graines sont implantées dans le sol. L'orifice de sortie (14) assure également un bon positionnement de la graine dans le sol. D'une manière préférentielle, ladite goulotte d'alimentation (10) est positionnée dans l'angle d'ouverture formé par les deux disques (9). La goulotte (10) a une telle forme qu'elle épouse sensiblement l'angle d'ouverture à l'arrière des deux disques (9) afin d'éviter la pénétration de terre ou de débris végétaux dans le dispositif d'implantation de graines dans le sol (4). Ladite goulotte d'alimentation (10) est maintenue entre les deux disques (9) au moyen d'un premier point de liaison constitué d'un dispositif d'accrochage (15) et d'un deuxième point de liaison constitué d'un point de liaison supérieur (16).

Selon une caractéristique importante de l'invention, ladite goulotte d'alimentation (10) est amovible sans nécessiter le démontage d'un desdits disques (9) au préalable. D'une manière préférentielle, ledit dispositif d'accrochage (15) est constitué d'un élément femelle (17) et d'un élément mâle (18). L'élément femelle (17) est disposé sur la partie arrière dudit support de disques (8) en considérant la direction d'avance (F). L'élément mâle (18) appartient, quant à lui, à ladite goulotte d'alimentation en graines (10). L'élément mâle (18) comporte avantageusement des pattes qui sont emboîtées, lors du montage, dans au moins une rainure (19) de l'élément femelle (17). Ledit élément femelle (17) comporte d'une manière préférentielle deux rainures (19) disposées de part et d'autre dudit support de disques (8). L'élément mâle (18) comporte avantageusement deux pattes. Ledit dispositif d'accrochage (15) est conformé de telle manière que lorsque l'élément mâle (18) est placé dans l'élément femelle (17), ladite goulotte d'alimentation (10) est alors libre en rotation autour de l'élément femelle (17). Afin d'empêcher cette rotation, ladite goulotte d'alimentation (10) est liée audit support de disques (8) au moyen dudit point de liaison supérieur (16). Tant que ledit deuxième point de liaison est neutralisé, ladite goulotte d'alimentation (10) peut pivoter vers l'arrière autour dudit premier point de liaison.

Dans une réalisation avantageuse, ledit point de liaison supérieur (16) est disposé sensiblement au-dessus dudit dispositif d'accrochage (15). Ledit point de liaison supérieur (16) comporte une encoche (20) et un ergot (21). Ladite encoche (20) est avantageusement ménagée dans ledit support de disques (8) et ledit ergot (21) est apporté sur ladite goulotte d'alimentation en graines (10). La rotation de ladite goulotte d'alimentation (10) est bloquée lorsque ledit ergot (21) est logé dans ladite encoche (20). Ledit point de liaison supérieur (16) comprend aussi un moyen de verrouillage (22). Ledit moyen de verrouillage (22) immobilise ladite goulotte d'alimentation en graines (10) lorsque l'ergot (21) est emboîté dans ladite encoche (20). Le moyen de verrouillage (22) est, de préférence, constitué d'une languette (23) et d'un pion de verrouillage (24). Ladite languette (23) est liée audit support de disques (8) au moyen d'une vis. Ladite languette (23) vient s'emboîter dans ledit pion de verrouillage (24) disposé sur une desdites face de ladite goulotte d'alimentation (10). Ladite languette (23) est avantageusement une pièce métallique possédant une certaine élasticité.

La présente invention est remarquable en ce que la goulotte d'alimentation en graines (10) est amovible sans nécessiter d'outil. Avantageusement, le démontage de ladite goulotte d'alimentation (10) ne nécessite pas l'utilisation d'un quelconque outil. Il suffit de libérer ledit pion de verrouillage (24) de ladite languette (23), de faire pivoter ladite goulotte d'alimentation (10) vers l'arrière afin de désolidariser ledit tube d'alimentation (6) emboîté dans l'orifice d'entrée (13). Puis, de dégager ladite goulotte d'alimentation (10) de l'élément femelle (17).

Afin de séparer et d'associer rapidement ledit tube d'alimentation (6) et ladite goulotte d'alimentation (10), ledit tube d'alimentation (6) est avantageusement télescopique. Le démontage de ladite goulotte d'alimentation (10) est donc très rapide et ne nécessite pas l'utilisation d'un quelconque outil. A la lumière de la figure 3, l'accès audit moyen de verrouillage (22) est possible sans démonter préalablement un élément dudit dispositif d'implantation de graines dans le sol (4). Lorsque la goulotte d'alimentation (10) est retirée, l'accès à la (ou les) partie(s) encombrée(s) par l'accumulation de terre et de débris végétaux est instantané. Le nettoyage desdits organes d'implantation de graines dans le sol (4) est donc rapide et simple.

Un avantage appréciable de l'invention est obtenu par le fait que le démontage de ladite goulotte d'alimentation (10) se fait par l'arrière, en considérant le sens d'avancement (F). En effet, l'accessibilité aux organes d'implantation de graines dans le sol (4) par l'arrière est optimale car il n'y a pas d'éléments empêchant l'accès à la goulotte d'alimentation (10).

Dans une réalisation avantageuse de la présente invention, la goulotte d'alimentation en graines (10) constitue une pièce interchangeable. Comme la goulotte d'alimentation en graines (10) est amovible, l'utilisateur peut donc rapidement et facilement démonter et remonter des goulottes d'alimentation en graines (10) avec un orifice de sortie (14) adapté aux types de graines et/ou types de sols à ensemencer.

Il est bien évident que l'invention n'est pas limitée aux modes de réalisation décrit ci-dessus et représentés sur les dessins annexés. Des modifications restent possibles, notamment en ce qui concerne la constitution ou le nombre d'éléments ou par substitution d'équivalents techniques, sans pour autant sortir du domaine de protection tel que défini dans les revendications.

C'est ainsi qu'il est possible de prévoir qu'un tel dispositif d'implantation de graines dans le sol (4) peut également être utilisé sur un semoir pneumatique. Pour un tel semoir, il est courant d'avoir de grandes largeurs de travail, les dispositifs d'implantation de graines dans le sol (4) s'étendent donc au-delà de la largeur de la trémie.

Il est également imaginable d'utiliser un semoir (1) conforme à l'invention en solo comme représenté sur la figure 1 ou combiné à une machine de travail du sol.

Il est aussi possible de prévoir que le semoir (1) conforme à l'invention soit un semoir multirangs comportant plus de deux rangées d'organes d'implantation de graines dans le sol (4) orthogonales à la direction d'avance ou alors un semoir monorang comportant une seule rangée d'organes d'implantation de graines dans le sol (4).

Il est tout à fait envisageable d'avoir un moyen de verrouillage (22) sur les deux faces de ladite goulotte d'alimentation en graines (10) et par conséquent une languette (23) est fixée de part et d'autre dudit support de disques (8) pour bloquer ladite goulotte d'alimentation (10) de chaque côté. Chaque languette (23) est emboîtée dans un pion de verrouillage respectif (24) disposé sur les deux faces de ladite goulotte d'alimentation (10).

## Revendications

1. Dispositif d'implantation de graines dans le sol (4) comportant deux disques (9), un support de disques (8) et une goulotte d'alimentation en graines (10) liée de manière amovible d'une part audit support de disques (8) au moyen d'un premier point de liaison constitué d'un dispositif d'accrochage (15) et d'autre part audit dispositif d'implantation de graines dans le sol (4) au moyen d'un deuxième point de liaison, ladite goulotte d'alimentation en graines (10) étant amovible sans nécessiter le démontage d'un desdits disques (9), ***caractérisé par le fait* que** ledit premier point de liaison est conformé de sorte que ladite goulotte d'alimentation en graines (10) puisse pivoter vers l'arrière après neutralisation dudit deuxième point de liaison.

2. Dispositif d'implantation de graines dans le sol selon la revendication 1, ***caractérisé par le fait* que** ladite goulotte d'alimentation en graines (10) est amovible sans nécessiter d'outil.

3. Dispositif d'implantation de graines dans le sol selon la revendication 1, ***caractérisé par le fait* que** ledit dispositif d'accrochage (15) est constitué d'un élément femelle (17) et d'un élément mâle (18).

4. Dispositif d'implantation de graines dans le sol selon la revendication 3, ***caractérisé par le fait* que** ledit élément femelle (17) est disposé sur la partie arrière dudit support de disques (8).

5. Dispositif d'implantation de graines dans le sol selon la revendication 3 ou 4, ***caractérisé par le fait* que** ledit élément femelle (17) comporte au moins une rainure (19).

6. Dispositif d'implantation de graines dans le sol selon la revendication 3, ***caractérisé par le fait* que** ledit élément mâle (18) appartient à ladite goulotte d'alimentation en graines (10).

7. Dispositif d'implantation de graines dans le sol selon les revendications 5 et *6,* ***caractérisé par le fait* que** ledit élément mâle (18) est emboîté dans ladite ou au moins une desdites rainure(s) (19).

8. Dispositif d'implantation de graines dans le sol (4) selon la revendication 1, ***caractérisé par le fait* que** ledit deuxième point de liaison est constitué d'un point de liaison supérieur (16).

9. Dispositif d'implantation de graines dans le sol selon la revendication 8, ***caractérisé par le fait* que** ledit point de liaison supérieur (16) est constitué d'une encoche (20) ménagée dans ledit support de disque (8) et d'un ergot (21) appartenant à ladite goulotte d'alimentation en graines (10).

10. Dispositif d'implantation de graines dans le sol selon la revendication 8, ***caractérisé par le fait* que** ledit point de liaison supérieur (16) comporte encore un moyen de verrouillage (22).

11. Dispositif d'implantation de graines dans le sol selon la revendication 1, ***caractérisé par le fait* que** ledit moyen de verrouillage (22) comporte une languette (23) et un pion de verrouillage (24).

12. Dispositif d'implantation de graines dans le sol selon la revendication 11, ***caractérisé par le fait* que** ladite ou au moins une desdites languette(s) (23) s'emboîte dans ledit pion de verrouillage correspondant (24), ledit pion de verrouillage (24) appartenant à la goulotte d'alimentation en graines (10).

13. Dispositif d'implantation de graines dans le sol selon la revendication 11 ou *12,* ***caractérisé par le fait* que** ladite ou au moins une desdites languette(s) (23) est une pièce élastique.

14. Dispositif d'implantation de graines dans le sol selon l'une quelconque des revendications 11 à 13, ***caractérisé par le fait* que** ladite ou au moins une desdites languette(s) (23) est une pièce métallique.

15. Dispositif d'implantation de graines dans le sol selon l'une quelconque des revendications 1 à 14, ***caractérisé par le fait* que** ladite goulotte d'alimentation en graines (10) est interchangeable.

16. Semoir (1) comportant au moins un dispositif d'implantation de graines dans le sol (4) selon l'une des revendications 1 à 15.

## Claims

1. Device for planting seeds in the ground (4) comprising two discs (9), a disc support (8) and a seed supply spout (10) connected removably on one hand to the said disc support (8) by means of a first connection point consisting of a coupling device (15) and on the other hand to the said device for planting seeds in the ground (4) by means of a second connection point, the said seed supply spout (10) being removable without requiring the removal of one of the said discs (9), ***characterized in* that** the said first connection point is shaped so that the said seed supply spout (10) can pivot rearwards after neutralization of the said second connection point.

2. Device for planting seeds in the ground according to Claim 1, ***characterized in* that** the said seed supply spout (10) can be removed without the need for a tool.

3. Device for planting seeds in the ground according to Claim 1, ***characterized in* that** the said coupling device (15) consists of a female element (17) and a male element (18).

4. Device for planting seeds in the ground according to Claim 3, ***characterized in* that** the said female element (17) is placed on the rear part of the said disc support (8).

5. Device for planting seeds in the ground according to Claim 3 or 4, ***characterized in* that** the said female element (17) comprises at least one groove (19).

6. Device for planting seeds in the ground according to Claim 3, ***characterized in* that** the said male element (18) belongs to the said seed supply spout (10).

7. Device for planting seeds in the ground according to Claims 5 and 6, ***characterized in* that** the said male element (18) is fitted into the said, or at least one of the said, groove(s) (19).

8. Device for planting seeds in the ground according to Claim 1, ***characterized in* that** the said second connection point consists of an upper connection point (16).

9. Device for planting seeds in the ground according to Claim 8, ***characterized in* that** the said upper connection point (16) consists of a notch (20) made in the said disc support (8) and a lug (21) belonging to the said seed supply spout (10).

10. Device for planting seeds in the ground according to Claim 8, ***characterized in* that** the said upper connection point (16) also comprises a locking means (22).

11. Device for planting seeds in the ground according to Claim 1, ***characterized in* that** the said locking means (22) comprises a tab (23) and a locking pin (24).

12. Device for planting seeds in the ground according to Claim 11, ***characterized in* that** the said, or at least one of the said, tab(s) (23) fits into the said corresponding locking pin (24), the said locking pin (24) belonging to the seed supply spout (10).

13. Device for planting seeds in the ground according to Claim 11 or 12, ***characterized in* that** the said, or at least one of the said, tab(s) (23) is an elastic part.

14. Device for planting seeds in the ground according to any one of Claims 11 to *13,* ***characterized in* that** the said, or at least one of the said, tab(s) (23) is a metal part.

15. Device for planting seeds in the ground according to any one of Claims 1 to *14,* ***characterized in* that** the said seed supply spout (10) is interchangeable.

16. Seed drill (1) comprising at least one device for planting seeds in the ground according to one of Claims 1 to 15.

## Patentansprüche

1. Sameneinführvorrichtung (4) mit zwei Scheiben (9), einem Scheibenträger (8) und einer Samenzuführrinne (10), die abnehmbar einerseits mit dem Scheibenträger (8) mit Hilfe eines ersten Verbindungspunktes, der von einer Kupplungsvorrichtung (15) gebildet ist, und andererseits mit der Sameneinführvorrichtung (4) mit Hilfe eines zweiten Verbindungspunktes verbunden ist, wobei die Samenzuführrinne (10) abnehmbar ist, ohne die Demontage einer der Scheiben (9) zu erfordern, ***dadurch gekennzeichnet,* dass** der erste Verbindungspunkt derart ausgeführt ist, dass die Samenzuführrinne (10) nach Neutralisieren des zweiten Verbindungspunktes nach hinten schwenken kann.

2. Sameneinfiihrvorrichtung nach Anspruch 1, ***dadurch gekennzeichnet,* dass** die Samenzuführrinne (10) abnehmbar ist, ohne ein Werkzeug zu erfordern.

3. Sameneinführvorrichtung nach Anspruch 1, ***dadurch gekennzeichnet,* dass** die Kupplungsvorrichtung (15) von einem weiblichen Element (17) und einem männlichen Element (18) gebildet ist.

4. Sameneinführvorrichtung nach Anspruch 3, ***dadurch gekennzeichnet,* dass** das weibliche Element (17) auf dem hinteren Teil des Scheibenträgers (8) angeordnet ist.

5. Sameneinführvorrichtung nach Anspruch 3 oder 4, ***dadurch gekennzeichnet,* dass** das weibliche Element (17) mindestens eine Rille (19) umfasst.

6. Sameneinführvorrichtung nach Anspruch 3, ***dadurch gekennzeichnet,* dass** das männliche Element (18) der Samenzuführrinne (10) angehört.

7. Sameneinführvorrichtung nach den Ansprüchen 5 und 6, ***dadurch gekennzeichnet,* dass** das männliche Element (18) in die oder mindestens eine der Rillen (19) eingefügt ist.

8. Sameneinführvorrichtung nach Anspruch 1, ***dadurch gekennzeichnet,* dass** der zweite Verbindungspunkt von einem oberen Verbindungspunkt (16) gebildet ist.

9. Sameneinführvorrichtung nach Anspruch 8, ***dadurch gekennzeichnet,* dass** der obere Verbindungspunkt (16) von einer Kerbe (20), die in dem Scheibenträger (8) vorgesehen ist, und einem haken (21) gebildet ist, der der Samenzuführrinne (10) angehört.

10. Sameneinführvorrichtung nach Anspruch 8, ***dadurch gekennzeichnet,* dass** der obere Verbindungspunkt (16) ferner ein Verriegelungsmittel (22) umfasst.

11. Sameneinführvorrichtung nach Anspruch 1, ***dadurch gekennzeichnet,* dass** das Verriegelungsmittel (22) eine Zunge (23) und ein Verriegelungsstück (24) umfasst.

12. Sameneinführvorrichtung nach Anspruch 11, ***dadurch gekennzeichnet,* dass** die oder mindestens eine der Zungen (23) in das entsprechende Verriegelungsstück (24) eingefügt wird, wobei das Verrieglungsstück (24) der Samenzuführrinne (10) angehört.

13. Sameneinführvorrichtung nach Anspruch 11 oder 12, ***dadurch gekennzeichnet,* dass** die oder mindestens eine der Zungen (23) ein elastisches Stück ist.

14. Sameneinführvorrichtung nach irgend einem der Ansprüche 11 bis 13, ***dadurch gekennzeichnet,* dass** die oder mindestens eine der Zungen (23) ein metallisches Stück ist.

15. Sameneinführvorrichtung nach irgend einem der Ansprüche 1 bis 14, ***dadurch gekennzeichnet,* dass** die Samenzuführrinne (10) austauschbar ist.

16. Sämaschine (1) mit mindestens eine Sameneinführvorrichtung nach einem der Ansprüche 1 bis 15.
